# EUROPEAN PATENT APPLICATION

(11) **EP 3 604 703 A1**
(43) Date of publication of application: **05.02.2020**
(21) Application number: 18776914.6
(22) Date of filing: 23.03.2018
(51) Int. Cl.: E04B 5/18, C04B 20/00

(54) **METHOD FOR PRODUCING MORTARS WITH PLASTIC WASTE AND USE THEREOF IN A BEAM FILL PIECE FOR ONE-WAY SLAB FLOORS**

(30) Priority: 31.03.2017 ES 201700419
(71) Applicant: Universidad De Sevilla, 41013 Sevilla (ES)
(72) Inventor: RUBIO DE HITA, Paloma, E-41012 Sevilla (ES); PÉREZ GÁLVEZ, Filomena, E-41012 Sevilla (ES); MORALES CONDE, María Jesús, E-41012 Sevilla (ES); RODRIGUEZ LIÑÁ, Carmen, E-41012 Sevilla (ES)
(74) Representative: Carvajal y Urquijo, Isabel
(86) International application number: PCT/ES2018/000027
(87) International publication number: WO 2018/178419

(57) **Abstract**

The object of the present invention is the manufacture of a mortar of cement and polypropylene plastic waste to prepare beam fill pieces for one-way slabs. It is applicable in the construction sector for the execution of one-way slabs with curved or vaulted beam fills with timber, metal and/or concrete beams for the rehabilitation of slabs with timber beams taking advantage of the existing beams. The invention comprises the method for the preparation of the mortar by means of the mixing of plastic waste in different percentages with cement and commercial aggregate and water for the definition of the mortar. It also includes the different geometric configurations of the beam fill piece depending on whether the ribbed slabs are constructed with timber, concrete or metal beams and the definition of their placement at the worksite. The proposed piece in turn makes it possible to provide a good construction solution from the eco-efficiency perspective due to the recycling of plastic material, as well as from the structural point of view, obtaining a slab solution with less weight and increased thermal insulation than the traditional solution.

## Description

### OBJECT OF THE INVENTION

The object of the present invention is a method that comprises a) the obtaining of the plastic waste from the recycling plant, for the mixture, b) the mixture of the plastic waste, shredded mixed polypropylene, with cement and commercial aggregate with a maximum size of 8 mm to obtain a mortar and c) beam fill piece for one-way ribbed slabs with timber, metal and/or concrete beams, manufactured with said mortar with different proportions of plastic waste.

It is applicable in the construction sector, and would be used for the construction of slabs with vaulted or consolidated beam fills with timber, metal and/or concrete beams, or for the rehabilitation of timber slabs taking advantage of the existing beams.

### STATE OF THE ART

The recovery of this type of slab is based on traditional slabs made of timber or metal beams with brick masonry vaults, which are replaced with the prefabricated pieces of the invention.

The new pieces make it possible to cover variable inter-axis spaces and thicknesses and are presented as an alternative in the processes of rehabilitation and new construction of slabs with beam fill. The advantages of the proposed pieces include their lighter weight in comparison with the traditional construction system, which makes them ideal for the rehabilitation of buildings. In addition, the invention makes it possible the take advantage of urban plastic waste through an eco-efficient construction solution.

The current environmental crisis that is being experienced at this time and factors, such as overpopulation, the different modern human activities and consumerism, have contributed to the accumulation of a large quantity of plastic waste (thousands of tons per year) that is steadily increasing. Furthermore, not all countries have the proper technology to recycle their waste and, until now, the handling of the waste has not been efficient. Open burning and disposal in landfills, for example, cause pollution problems, which result in significant environmental harm.

In this context, the generation of plastic products is increasing, totaling two hundred and eighty-eight tons in 2010, of which, close to ten tons ended up in landfills, another nine tons were transformed into new energy and approximately six tons were recycled [1].

In this regard, in recent years, legislative requirements aimed at reducing the environmental impact caused by the production of plastic waste have become increasingly stringent.

The generation of a progressive volume of plastic requires the execution of studies regarding the possibility of reusing this plastic waste. In Spain, the National Integrated Waste Plan (PNIR 2008-2015) [2] attempts to promote the demand for products generated by the recycling of APW (Agricultural Plastic Waste) and PW (Packaging Waste), especially plastic. According to sources from Ciclaplast [3], plastic recycling in Spain has increased spectacularly in recent years. However, the construction sector is one of the sectors that recycles the least plastic, just 1%, in comparison with other sectors such as the industrial or agricultural sectors.

The construction sector is a large consumer of natural resources and raw materials, and for this reason, the viability of the use of this waste and its implementation in new materials and products present a favorable impact on the environment.

These alternatives have been covered in research projects in recent years by means of the application of recycled plastic in different materials and products.

The commercial models that currently exist on the market with a similar use utilize concrete or ceramic in the manufacture of these pieces. The models currently manufactured on the market have dimensions that are larger than the usual dimensions of traditional timber beam fills and would not be suitable for the rehabilitation of slabs in which the existing beams are to be conserved. With these models, the manufactured slab would be heavier than slabs made with the proposed pieces.

The scientific bibliography studied makes use of plastic as an addition to mortar, but in no case is the proposed type of plastic used, polypropylene, nor is it used for the manufacture of the proposed beam fill pieces [4] [5] [6] [7] [8] [9] [10] [11].

In regard to similar patents, based on the material used for the manufacture of the pieces, the following were found: The patent for a voided mortar [12] by means of the addition of shredded polyurethane (PU) foam and surfactant additives and which are used generically as construction materials.

[13] patents a mortar that provides good thermal insulation properties, using recycled shredded hard polyurethane (PU) in its composition, as well as other additives.

[14] patents a mortar and lightweight concrete manufactured with a base of a hydraulic conglomerate and several lightweight additions, including expanded polyethylene and other granulated plastics.

In 2016, a method was patented to manufacture a plastic aggregate and its use to manufacture concrete products with improved properties of strength and lighter weight [15]. The aggregate is formed by an extrusion process of granulated plastic material from recycling.

In [16] a method to use recycling, of shredded PET plastic waste to be use as a mortar binder. The proposed mortar improves properties such as compression and flexural strength and a use of the mortar as a material for the rapid repair of highways is proposed.

[17] proposes a process for the manufacture of concrete or mortar based on hydraulic binders and plastic materials for the production of construction elements or coverings with special resistance to shocks and impact, abrasion, thawing, melting, salts and chemical attacks.

In [18], the invention discloses a lightweight concrete with plastic waste that is thermo-cured and reinforced with fiberglass.

[19] patents a brick, manufactured with a thermoplastic material, high-density polyethylene (HDPE), that has an outer covering of a cement paste.

Lastly, patent [20] proposes a piece with a similar geometry, but made with ceramic waste, which increases the weight of the piece, and only for use in wooden slabs. The proposed invention uses another type of mortar with a different physical and mechanical behavior for its manufacture. It also expands the design of the piece to allow it to be used in slabs with wooden, metal and/or concrete beams. It also has the advantage of being more eco-efficient by using a waste that is very abundant quantitatively speaking and that generates greater pollution problems as a result of its accumulation in landfills or emission of harmful elements to the atmosphere when it is burned.

### References

[1] European Association of Plastic Manufacturers (Plastics Europe). Plastics the Facts 2016. "An analysis of European plastics production, demand and waste data. For 2015". Brussels 2012.
[2] Plan Nacional Integrado de Residuos (PNIR) 2008-2015. BOE 49. 26/02/2009. Resolution 20 February 2009, of the State Secretariat for Climate Change, publishing the Agreement of the Council of Ministers approving the National Integrated Waste Plan for the period 2008-2015.
[3] Cicloplast: Sociedad española promotora del reciclaje de los plásticos. www.cicloplast.com
[4] N. Saikia, J. de Brito. (2014). Mechanical properties and abrasion behavior of concrete containing shredded PET bottle waste a partial substitution of natural aggregates. Construction and Building Materials 52: 236-244.
[5] A. M. da Silva, J. de Brito, R. Veiga. Incorporation of fine plastic aggregates in rendering mortars Construction and Building Materials, Volume 71, 30 November 2014, Pages 226-2
[6] L.Ferreira, J. de Brito, N. Saikia.(2012) Influence of curing conditions on the mechanical performance of concrete containing recycled plastic aggregate. Construction and Building Material 36:196-204
[7] B. Safi, M. Saidi, D. Aboutaleb, M. Maallem. (2013).The use of plastic waste as fine aggregate in self-compacting mortars: Effect on physical and mechanical properties. Construction and Building Materials 44: 436-442.
[9] YW Choi, DJ Moon, K. Zhang, Z. Gao, P. LI. Et al. (2009). Characteristics of mortar and concrete containing fine aggregate manufactured from recycled waste polyethylene terephalate bottles. Construction and Building Materials 23(8): 2829-35.
[10] Z. Ge, D. Huang, R.Sun, Z. Gao.(2014) Properties of plastic mortar made with recycled polyethylene terephthalate. Construction and Building Materials 73: 682-687
[11] Z. Ge, H. Yue, R. Sun. (2015) Properties of mortar produced with recycled clay brick aggregate and PET. Construction and Building Materials 93: 851-856
[12] *Mortero estructural aligerado y de baja porosidad fabricado con residuos de poliuretano [Structural lightweight mortar with low porosity produced with polyurethane residues].* Veronica Calderón Carpintero, Carlos Junco Petrement, Ángel Rodriguez Sáiz, Sara Gutiérrez Gonzalez, Jesus Gadea Sainz y Raquel Arroyo Sanz. WO2017017308A1; ES 2 598 902 (29/07/2016.)
[13] *Insulating mortar.* Wilfried Blocken. US 5904763 A (18/05/1999)
[14] *Latex modified mortar and concrete.* Riley Victor. EP 3061734 A1; WO 2015 059315 (A1); US 2016 264468 (A1); AU 2013 403634 (B2). (2013)
[15] *Extruded plastic aggregate for concrete.* Peter Barrow, Peter Hutchinson, Andrew Ferrier. WO 2016084007 A1 (02/06/2016).
[16] *Method for recycling PET (polyethylene terephthalate) plastics, early-strength plastic mortar and method for preparing mortar.* Zhi Ge, Pengcheng Li, Kun Zhang. CN102311244A (2011).
*[17] Concrete mixtures or mortar mixtures or concretes or mortars and process for their production.* Friedrich Howanietz Alexander Kozlowski. US 4340510 A (20-07-1982).
[18] *Glass fiber reinforced thermoset plastic waste doped concrete composition and process for preparation the same.* László Csatári. EP 2773597 A2.(10/09/2014)
[19] *Building bricks including plastics.* Fares D. Alsewailem. US 20120047833 A1.(1/03/2012)
[20] *Method for the manufacture of mortars with ceramic waste and use thereof in a beam fill piece for slabs with timber beams.* P. Rubio de Hita; F. Perez Gálvez; C. Rodriguez Liñán; M.J. Morales Conde. National Patent 201601008 (2016)

### DESCRIPTION OF THE FIGURES

Figure 1- Top view of the proposed beam fill piece, for slabs with timber beams.
Figure 2- Bottom view of the proposed beam fill piece, for slabs with timber beams.
   (a) Length of the piece (≤ 36 cm. Tolerance ±5 %)
   (b) Width of the piece (25 cm. Tolerance ±5 %)
   (c) Total height of the piece (≥12 cm. Tolerance ±1 %)
   (d) Support of the piece on wooden slats(2 cm).
   (e) Height of the camber of the piece (≥8 cm)
   (f) Height of the crown (≥4 cm. Tolerance ±1 %)

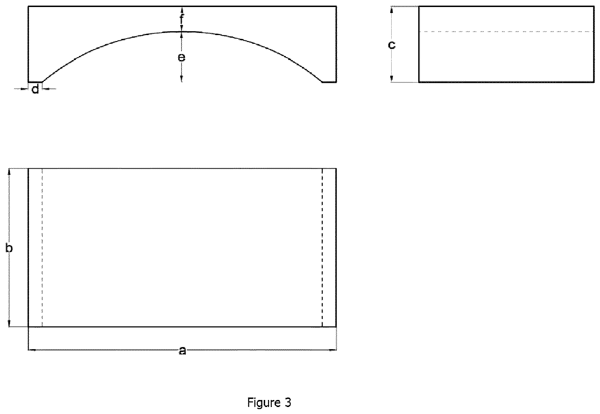

Figure 3.- Plan, cross-sectional and elevation view of the beam fill piece.

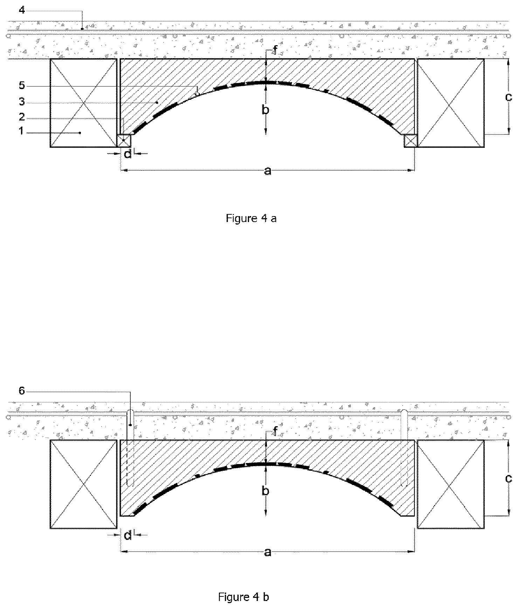

Figure 4.- Cross-sectional view of slab with timber beams and prefabricated beam fill piece.
   (1) Timber beam.
   (2) Timber slat nailed to the existing beam.
   (3) Prefabricated beam fill piece made of mortar with plastic waste.
   (4) Compression layer.
   (5) Finish layer of ceramic waste (e ≥ 0.5 cm)
   (6) Corrugated steel connector (φ = 6 mm)

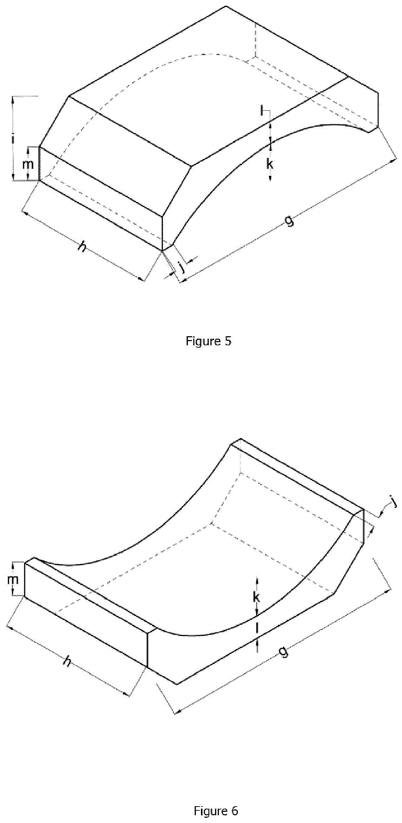

Figure 5- Top view of the proposed beam fill piece, for slabs with concrete or metal joists.
Figure 6- Bottom view of the proposed beam fill piece, for slabs with concrete or metal joists.
   (g) Length of the piece ≤ 75 cm. Tolerance ±5%
   (h) Width of the piece 25 cm. Tolerance ±5%
   (i) Total height of the piece ≥11.5 cm. Tolerance ±1 %
   (j) Support of the piece on the lower wing of the profile (2 cm).
   (k) Height of the camber of the piece (≥7 cm)
   (I) Height of the crown ≥4.5 cm. Tolerance ±1 %
   (m) Dimension ≥ 4.2 cm.

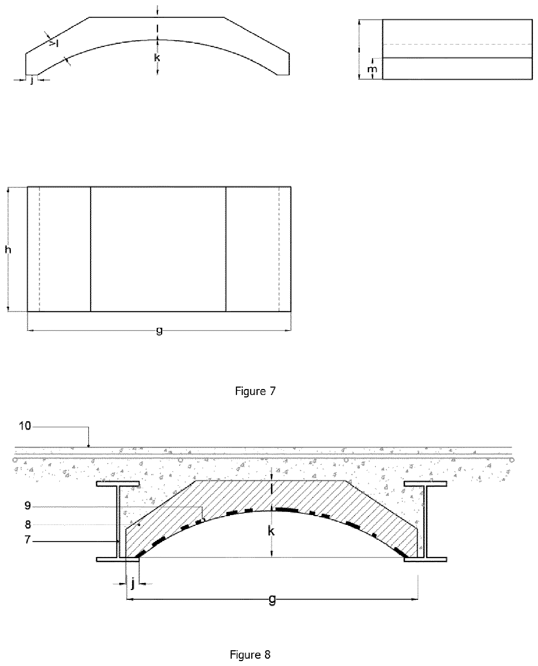

Figure 7.- Plan, cross-sectional and elevation view of the beam fill piece.
Figure 8.- Cross-sectional view of slab with metal beams and prefabricated beam fill piece.
   (7) Metal or concrete beam.
   (8) Prefabricated beam fill piece made of mortar with plastic waste.
   (9) Finish layer of ceramic waste (e ≥ 0.5 cm)
   (10) Compression layer.

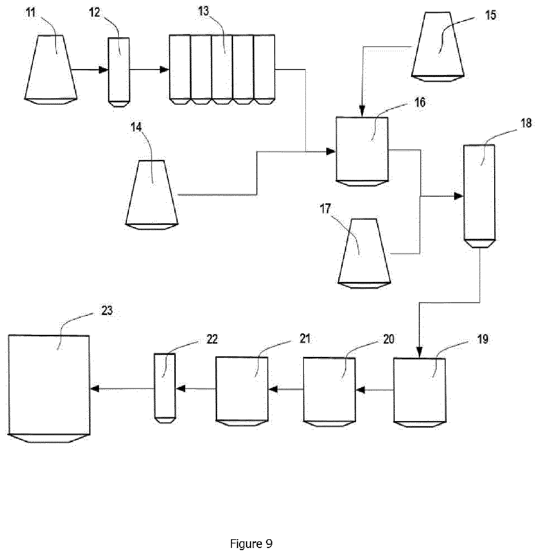

Figure 9.- Block diagram of an industrial process for the manufacture of the beam fill pieces prior to manufacture of the mortar with mixed polypropylene waste.

A possible industrial process may comprise, according to the present invention, a supply or stockpile of commercial sand: stockpiling in protected atmosphere (11), drying (12), selection and storage in a protected atmosphere of the grains, discarding aggregate >8 mm (13).

Stockpiling of recycled plastic (14) in protected atmosphere from waste plants.

The dry recycled plastic and aggregate will be mixed in the percentages indicated in Table 3 for the mortar with 12.5% of recycled plastic dosage and mixing phase (16). The cement is added (15), and lastly water in the ratio specified in table 3 (17). The final mixture is obtained through a kneading process (18).

Once the ideal mortar for the manufacture of the pieces has been obtained, the mortar is poured into the mold (19), cured (20), removed from the mold (21), undergoes quality control (22) and is stored and/or distributed (23).

### DESCRIPTION OF THE INVENTION

The invention comprises a method for obtaining a cement mortar using plastic waste in different proportions for the manufacture of beam fill pieces for one-way ribbed slabs. This plastic waste has been obtained from plants for urban waste recycling, specifically shredded mixed polypropylene. Using this material, beam fill pieces are manufactured that can be used for the construction of ribbed or vaulted slabs with timber, metal and/or concrete beams for the rehabilitation of slabs with timber beams, taking advantage of the same.

The method comprises
a) Selection of the plastic waste for the mixture
b) Mixture of the ceramic waste with cement and commercial aggregate with a maximum size of 8 mm to obtain the mortar.
c) Manufacture of the beam fill piece for the slab

The plastic waste used, mixed polypropylene, is characterized by having a processing, carried out in the recycling plant, comprising its preparation in the following stages:
∘ Selection process separating according to type.
∘ Shredding until a maximum particle size of 16 mm is obtained
∘ Washing, drying and spinning.

The plastic waste is one of the components of the mortar, in several percentages of 5%, 7.5%, 10%, 12.5% and 15% by weight, together with cement, for example Portland Bl / A-L 42,5R, and commercial aggregate whose maximum aggregate size (MAS) is 8 mm.

The mixture for obtaining the mortar comprises the following steps:
∘ Selection of the commercial aggregate.
∘ Selection of the plastic waste.
∘ Particle size of the usable ceramic waste.
∘ Mixture of the commercial aggregate and plastic waste with cement, substituting percentages of commercial aggregate with the plastic waste.
∘ Addition of water in a proportion of 0.80 in relation to the weight of the cement used (Said proportion is obtained through the consistency of the fresh mortar (UNE-EN-1015-3).

Lastly, another object of the invention are the beam fill pieces for one-way slabs. The shape of the beam fill piece will depend on the type of slab.

### 1. For slabs with timber beams

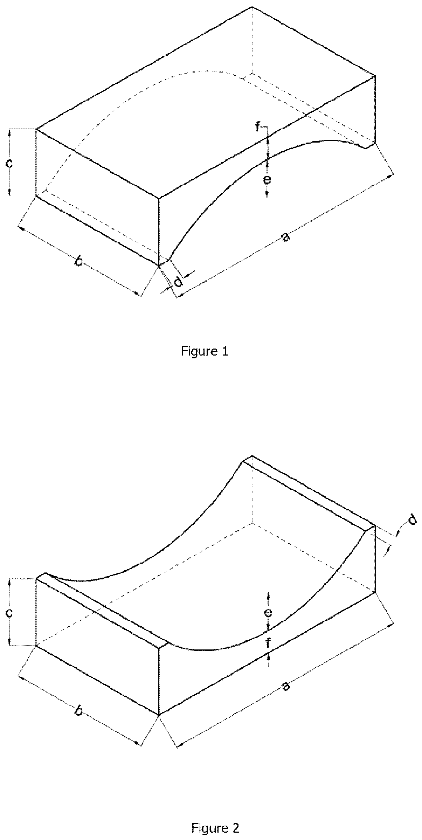

The beam fill piece will have a parallelepiped shape and will be vaulted on its lower side (Figure 1) (Figure 2) (Figure 3). These pieces will be made with the mortar of the invention having tested the pieces with the most unfavorable geometry.

The piece will have the following technical characteristics:
∘ It will be fabricated with the mortar of the invention that has a proportion of plastic waste of 12.5% which has been found to be the most optimal for this element in terms of density and strength.
∘ The pieces will have a length (space between beams) ≤ 36 cm (a) Tolerance +/-5 %.
∘ The width of the piece will be 25 cm (b). Tolerance +/-5%
∘ The total height of the piece will depend on the dimensions of the beams on which it is supported, and the upper face of the filler block must be at least level with the upper face of the beam. The total height of the piece will be ≥12 cm (c) Tolerance ±1 %
∘ The support dimension of the piece on timber slats that will be nailed to the existing beams will be 2 cm (d)
∘ The height of the camber of the piece will be ≥8 cm (e) Tolerance +/-1 %
∘ The height of the crown of the piece will be at least 4 cm (f).
∘ The compression strength of the piece measured according to UNE 67-042-88 for large format baked clay ceramic pieces, due to their similarity in regard to the shape of the element, will be greater than or equal to 125daN.

Once the piece has been fabricated, it will be placed in the slab using these methods:
∘ The piece will be supported on several wooden slats or similar elements, secured to the side face of the beams. (Figure 4(a))
∘ The piece may be hung from the compression layer of the slab by means of corrugated steel connectors embedded in the piece (Figure 4(b))

### 2. For slabs with concrete or metal joists

The pieces will have a shape similar to the previous pieces, although they will be chamfered on the upper corners as shown in the figures (Figure 5),(Figure 6),(Figure 7).

The piece will have the following technical characteristics:
∘ It will be fabricated with the mortar of the invention that has a proportion of plastic waste of 12.5% which has been found to be the most optimal for this element in terms of density and strength.
∘ The pieces will have a length (g) ≤ 52 cm. Tolerance ±5%
∘ The width of the piece will be 25 cm (h). Tolerance +/-5%
∘ The total height of the piece will depend on the dimensions of the beams on which it is supported, and the upper face of the filler block must be at least level with the upper face of the beam (i) and will be at least ≥12.5 cm. Tolerance ±1 %
∘ The support dimension of the piece on the lower wings of the profiles (j), will be 2 cm.
∘ The height of the camber of the piece (k) will be ≥8 cm. Tolerance +/-1 %
∘ The height of the crown of the piece will be at least 4.5 cm (I).
∘ The compression strength of the piece measured according to UNE 67-042-88 for large format baked clay ceramic pieces, due to their similarity in regard to the shape of the element, will be greater than or equal to 125daN.

Once the piece has been fabricated, it will be placed in the slab using the support on the lower wing of the joists (Figure 8)

After the piece has been put in place and the slab has been braced, the compression layer of the slab will be executed.

In both types of filler blocks, optionally, a finish layer of the curved bottom side may be incorporated. This layer will be executed with fragmented remnants of ceramic material installed in a tessellated mosaic, adhering to a polypropylene mesh. The tessellated mosaic will be positioned on the bottom of the mold and the mortar will be poured on it and compacted, leaving the ceramic exposed on the lower face. The recycled ceramic used will preferably be from industrial waste from worksites. This finish layer will provide increased fire resistance. (Fig. 4 and 5) (4)

### EMBODIMENT OF THE INVENTION

### 1. MORTAR

In this example of the invention, a mortar is prepared with mixed polypropylene plastic waste with percentages of 5%, 7.5%, 10%, 12.5% and 15% by weight and the dosages defined in Table 1.

The shredded mixed polypropylene is selected from the recycling plant and the commercial aggregate is selected with a maximum aggregate size (MAS) of 8 mm.

**Table 1. Dosage of the mortar.**

| ***Mix code*** | ***Plast* (%)** | ***Materials (Kg*/*m3)*** | | | | ***A*+*P*/*C*** | ***w*/*c Ratio*** |
|---|---|---|---|---|---|---|---|
| | | ***Sand*** | ***Cement*** | ***Plastic*** | ***Water*** | | |
| PP-C | 0 | 1819.38 | 303.23 | 0.00 | 242.50 | 1/6 | 0.80 |
| PP-5 | 5 | 1544.69 | 271.00 | 81.30 | 216.80 | 1/6 | 0.80 |
| PP-7.5 | 7.5 | 1475.00 | 265.76 | 119.59 | 212.61 | 1/6 | 0.80 |
| PP-10 | 10 | 1255.35 | 232.47 | 139.48 | 185.98 | 1/6 | 0.80 |
| PP-12.5 | 12.5 | 1184.72 | 225.68 | 169.38 | 180.54 | 1/6 | 0.80 |
| PP15 | 45 | 1103.93 | 216.46 | 194.81 | 173.82 | 1/6 | 0.80 |

The commercial aggregate will then be mixed with the plastic waste, and lastly, water will be added in a proportion of 0.80 in relation to the weight of the cement used in accordance with UNE-EN-1015-3. The mortar will be mixed in the conventional manner.

The tests performed on the prepared mortars will comply with the regulations in force for mortar specified in Table 2.

**Table 2. Mortar test standards**

| | |
|---|---|
| UNE-EN 998-2 | Mortar for masonry |
| UNE-EN-1015-1 | Determination of the granulometric distribution (by screening) |
| UNE-EN-1015-2 | Collection of the total sample of mortar and preparation of the mortars for testing |
| UNE-EN-1015-3 | Determination of the consistency of the fresh mortar (using the vibrating table) |
| UNE-EN-1015-6 | Determination of the apparent density of the fresh mortar |
| UNE-EN-1015-10 | Determination of the apparent dry density of the hardened mortar |
| UNE-EN-1015-11 | Determination of the flexural and compression strength of the hardened mortar |
| UNE-EN-1015-18 | Determination of the coefficient of water absorption due to capillary action of the hardened mortars |

The mortars obtained will comply with the values indicated in Table 3 in accordance with the tests established in the regulations.

**Table 3. Apparent density of the fresh and dry mortar, coefficient of water absorption, flexural and compression strength after 28 days and modulus of elasticity.**

| **SERIES** | **% Plast.** | APPARENT DENSITY OF THE FRESH MORTAR (kg/m3) | APPARENT DENSITY DRY MORTAR (kg/m3) | COEFFICIENT OF WATER ABSORPTION BY CAPILLARY ACTION kg/(m2·min^0.5) | FLEXURAL STRENGTH 28 DAYS (MPa) | COMPRESSION STRENGTH 28 DAYS (MPa) | MODULUS OF ELASTICITY 28 DAYS (N/mm2) |
|---|---|---|---|---|---|---|---|
| PP-C | 0 | 2365 | 2022 | 0.29 | 3.90 | 16.44 | 1032 |
| PP-5 | 5.0 | 2114 | 1792 | 0.16 | 2.64 | 10.14 | 809 |
| PP-7.5 | 7.5 | 2073 | 1749 | 0.15 | 2.42 | 8.79 | 674 |
| PP-10 | 10.0 | 1813 | 1682 | 0.14 | 2.19 | 7.81 | 577 |
| PP-12.5 | 12.5 | 1760 | 1582 | 0.12 | 1.97 | 6.50 | 549 |
| PP15 | 15.0 | 1689 | 1432 | 0.06 | 1.20 | 3.42 | 360 |

### 2. BEAM FILL PIECE

In this example, two beam fill pieces are made, with the mortar of the invention in a percentage of 12.5% by weight of the mixture as this is the ideal percentage in the weight/strength ratio for this purpose.

### Example 1: Beam fill piece for slabs with timber joists

To make the beam fill piece, after the mortar with the specified dosage has been obtained, the release agent is applied, the mortar is poured and compacted in a mold that reproduces the geometry of the pieces described above. The breaking load of the pieces must exceed the 125daN required in accordance with the standard UNE EN 67-042, after 28 days of curing of the piece at room temperature. Table 4 shows the necessary quantities of the different materials to manufacture the piece in example 1, as well as its dimensions and weight.

**Table 4. Example of dimensions, plastic content, water, cement and sand, water/cement ratio, weight and breaking load of filler blocks with 12.5% plastic, for beam fill for timber slabs.**

| **Filler blocks** | **Dimensions (cm)** | | | | | | **PLASTIC (g)** | **H2O** | **SAND** | **CEM.** | **A/C** | **WEIGHT (kg)** | **Flexural breaking load (daN)** |
|---|---|---|---|---|---|---|---|---|---|---|---|---|---|
| | **a** | **b** | **c** | **d** | **e** | **f** | | **(g)** | **(g)** | **(g)** | | | |
| B. for wooden slabs | 36 | 25 | 12 | 2 | 8 | 4 | 1058 | 1714 | 9191 | 2235 | 0.8 | 13.3 | 187 |

### Example 2. Beam fill piece for slabs with concrete and/or metal joists.

To make the beam fill piece, after the mortar with the specified dosage has been obtained, the release agent is applied, the mortar is poured and compacted in a mold that reproduces the geometry of the pieces described above. The breaking load of the pieces must exceed the 125daN required in accordance with the standard UNE EN 67-042, after 28 days of curing of the piece at room temperature. Table 5 shows the necessary quantities of the different materials to manufacture the piece in example 2, as well as its dimensions and weight.

**Table 5. Example of dimensions, plastic content, water, cement and sand, water/cement ratio, weight and breaking load of filler blocks with 12.5% plastic, of beam fill piece for slabs with metal or concrete joists.**

| **Filler blocks** | **Dimensions (cm)** | | | | | | **PLASTIC (g)** | **H2O** | **SAND** | **CEM.** | **A/C** | **WEIGHT (kg)** | **Flexural breaking load (daN)** |
|---|---|---|---|---|---|---|---|---|---|---|---|---|---|
| | **g** | **h** | **i** | **j** | **k** | **l** | | **(g)** | **(g)** | **(g)** | | | |
| B. for concrete/ metal slabs | 52 | 25 | 12.5 | 2 | 8 | 4.5 | 1747 | 2392 | 2831 | 3120 | 0.8 | 12.4 | 166 |

A possible industrial process may comprise (Fig. 9), according to the present invention, a supply or stockpile of commercial sand: stockpiling in protected atmosphere (11), drying (12), selection and storage in a protected atmosphere of the grains, discarding aggregate >8 mm (13).

Stockpiling of recycled plastic (14) in protected atmosphere from waste plants.

The dry recycled plastic and aggregate will be mixed in the percentages indicated in Table 3 for the mortar with 12.5% of recycled plastic dosage and mixing phase (16). The cement is added (15), and lastly water in the ratio specified in table 3 (17). The final mixture is obtained through a kneading process (18).

Once the ideal mortar for the manufacture of the pieces has been obtained, the mortar is poured into the mold (19), cured (20), removed from the mold (21), undergoes quality control (22) and is stored and/or distributed (23).

## Claims

1. A method for the manufacture of mortars with plastic waste **characterized in that** it comprises:
a) Preparation of the plastic waste, preferably mixed polypropylene
b) Mixture of the plastic waste with cement and commercial aggregate with a maximum size of 8 mm to obtain the mortar
c) Manufacture of the beam fill piece for the one-way slab with said mortar

2. The method for the manufacture of mortars with plastic waste according to the preceding claim: **characterized in that** the preparation of the recycled plastic waste, comprises the following stages:
a) Selective separation by type
b) Shredding with MAS of 16 mm
c) Washing, drying and spinning

3. The method for the manufacture of mortars with plastic waste, according to the preceding claims, **characterized in that** the percentage of plastic waste in the mortar is 5% to 15% by weight.

4. The method for the manufacture of mortars with plastic waste according to preceding claims, **characterized by** the maximum compression strength of the mortar between 3.5 MPa and 16.5 MPa after 28 days.

5. The method for the manufacture of mortars with plastic waste according to preceding claims, **characterized by** the maximum flexural strength of the mortar between 1.2 MPa and 4 MPa after 28 days.

6. The method for the manufacture of mortars with plastic waste according to preceding claims, **characterized in that** the mortar has a density between 1400 kg/m³ and 2000 kg/m³.

7. The method for the manufacture of mortars with plastic waste according to preceding claims, **characterized in that**, in the mixture, the addition of water ≤0.8 in relation to the weight of the cement used.

8. The method for the manufacture of mortars with plastic waste according to preceding claims, **characterized in that** after the mixture, the mortar is mixed, poured into the mold, compacted and cured.

9. The method for the manufacture of mortars with plastic waste according to preceding claims, **characterized by** a covering on the curved part of the piece, based on fragments of a ceramic material with a minimum thickness of 0.5 cm which will increase the fire resistance of the piece.

10. The method for the manufacture of mortars with plastic waste **characterized by** its application in a beam fill piece for one-way slabs with timber, metal or concrete beams according to any of the claims 1 to 9.

11. The method for the manufacture of mortars with plastic waste according to claim 10, **characterized by** beams from 12 to 20 cm high and beam fill between 18 to 40 cm for one-way slabs with timber beams.

12. The method for the manufacture of mortars with plastic waste according to claim 10 and 11, **characterized in that** the height of the crown of the piece, for one-way slabs with timber beams, will be at least 4 cm.

13. The method for the manufacture of mortars with plastic waste according to claim 10, **characterized by** metal or concrete beams with inter-axis spaces of 50, 60, 70 and 80 cm.

14. The method for the manufacture of mortars with plastic waste according to claims 10 and 13, **characterized in that** the height of the crown of the piece, for metal or concrete joists, will be at least 4.5 cm.
